# EUROPÄISCHE PATENTSCHRIFT

(11) **EP 1 013 905 B1**
(45) Veröffentlichungstag und Bekanntmachung des Hinweises auf die Patenterteilung: **04.09.2002**
(21) Anmeldenummer: 99123945.0
(22) Anmeldetag: 03.12.1999
(51) Int. Cl.: F01N 3/28, F01N 7/04

(54) **Katalysator-Anordnung an einem Kraftfahrzeug**
Arrangement of a catalytic converter at an internal combustion engine
Agencement d'un catalyseur à un moteur à combustion interne

(30) Priorität: 18.12.1998 DE 19858641
(43) Veröffentlichungstag der Anmeldung: 28.06.2000
(73) Patentinhaber: Volkswagen Aktiengesellschaft, 38436 Wolfsburg (DE)
(72) Erfinder: Sjenar, Dzemal, 38444 Wolfsburg (DE)
(74) Vertreter: Frank, Gerhard, Dipl.-Phys.

(56) Entgegenhaltungen:
- EP-A- 0 807 749
- DE-A- 4 114 745
- US-A- 4 663 934
- US-A- 5 265 420
- US-A- 5 325 666
- PATENT ABSTRACTS OF JAPAN vol. 008, no. 112 (M-298), 25. Mai 1984 (1984-05-25) & JP 59 020519 A (YAMAHA HATSUDOKI KK), 2. Februar 1984 (1984-02-02)
- PATENT ABSTRACTS OF JAPAN vol. 1998, no. 04, 31. März 1998 (1998-03-31) & JP 09 317450 A (SUZUKI MOTOR CORP), 9. Dezember 1997 (1997-12-09)

## Beschreibung

Die vorliegende Erfindung betrifft eine Katalysator-Anordnung an einem Kraftfahrzeug gemäß dem Oberbegriff des Patentanspruches 1.

Die sich ständig verschärfenden Abgasemissionsvorschriften sind mit einer Anordnung eines Katalysators unter dem Fahrzeug (motorfern) auf Dauer nicht mehr zu erfüllen. Die Verwendung von krümmernahen Startkatalysatoren bzw. von krümmernahen Hauptkatalysatoren wird immer mehr zur Notwendigkeit. So ist einerseits die Forderung nach einer motornahen Unterbringung des Katalysators vorhanden, sowie andererseits das Problem, bei zu kurzen Abgasleitungen an den Auslässen des Motors, den gewünschten Drehmomentverlauf zu erreichen.

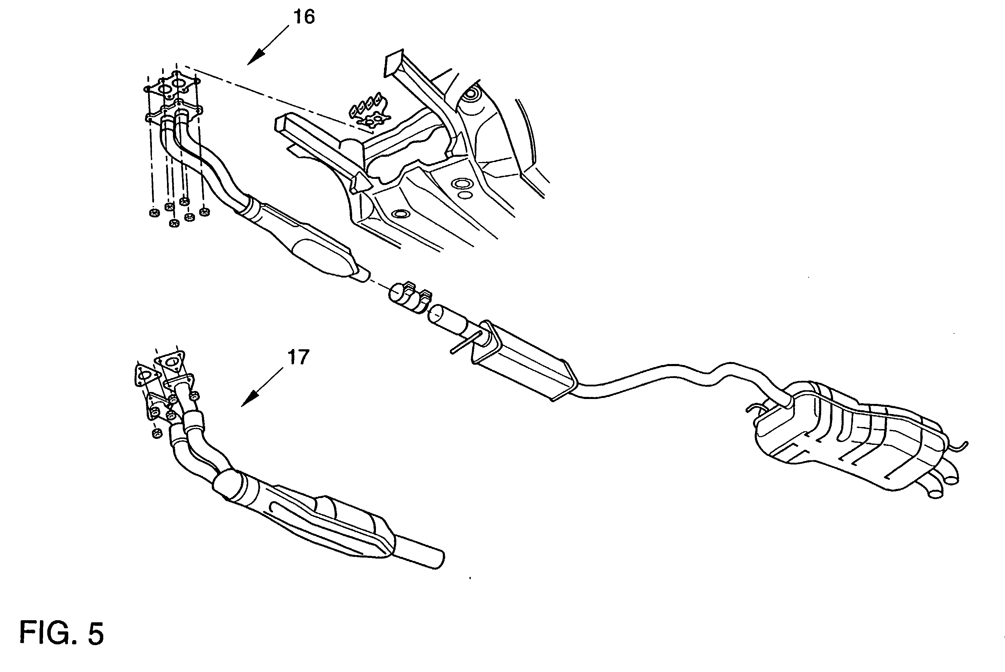

Ein weiteres Problem bei den herkömmlichen Ausführungen von Abgasanlagen ist deren Abkopplung von Motorschwingungen. Um den günstigen Drehmomentverlauf zu gewährleisten sind üblicherweise an den Krümmer angeschlossene Vorrohre zweiflutig ausgeführt. Die Abkopplung der Abgasanlagen von den Motorschwingungen erfolgt dann über ein zweiflutiges Abkopplungselement 16 oder zwei einflutige Abkopplungselemente 17 (siehe Figur 5).

Bei der Verwendung von solchen konventionellen, selbsttragenden Abkopplungselementen treten an der Abgasanlage in den Aufhängungspunkten und in den Resonanzstellen Schwingungen in der Größenordnung von 500 µm auf. Dadurch ist die Abgasanlage sehr stark mit Biegebelastungen beansprucht, was sehr oft zu Brüchen an der Abgasanlage oder zu akustischen Problemen führt. Diese akustischen Probleme treten in den meisten Fällen durch die über die Aufhängungen an die Karosserie übertragenen Schwingungen auf. Erfahrungsgemäß dürfen jedoch die Schwingwege an der Abgasanlage in den Aufhängungspunkten und in den Resonanzstellen den Wert von 80 µm nicht übersteigen. Dies ist nur mit einem flexiblen Schlauch (Flexschlauch) zu erreichen, wobei bei einem zweiflutigen System diese Möglichkeit ausscheidet. Aus Kostengründen ist das Vorsehen zweier Flexschläuche nicht akzeptabel.

Gattungsgemäße, bekannte Vorrichtungen zur krümmernahen bzw. motornahen Anordnung eines Katalysators an einem Kraftfahrzeug sind beispielsweise in der DE 41 14 745 A1, der DE-OS 195 23 540, der DE-OS 41 16 493 oder der EP-0,809,001 offenbart.

Aus der gattungsbildenden DE 41 14 745 A1 ist eine Katalysator-Anordnung an einem Kraftfahrzeug mit einem im wesentlichen zylindrischen Katalysatorgehäuse, welches motornah angeordnet ist, bekannt. Diese Anordnung weist eine Mehrzahl von Zuleitungen auf, die zwischen Auslässen eines Motors des Kraftfahrzeuges und zwei Einlässen des Katalysatorgehäuses angeordnet sind. Hierbei münden die Zuleitungen an den beiden durch Hauben gebildeten Stirnflächen des im wesentlichen zylindrischen Katalysatorgehäuses. Die Abgasableitung erfolgt mittels einer bezüglich des Katalysatorgehäuses axial mittig angeordneten Ableitung. Hierbei ist die axiale Erstreckung des Katalysatorgehäuses im wesentlichen parallel zu der Hauptrichtung des Motors.

Bei dieser Anordnung münden jeweils die Auslässe gleichlaufender Zylinder in die selbe Stirnfläche des Katalysatorgehäuses. Hierdurch sollen Sog- und Druckwellen erzeugt werden, um so zu erreichen, dass jeder Abgasstrom zumindest teilweise durch beide im Gehäuse angeordneten Katalysatormatrizen gezogen wird.

Aus der DE-OS 195 23 540 ist eine Katalysator-Anordnung zur krümmernahen Anbringung eines Katalysators bekannt, bei der die Ausläße eines Motors in ein im wesentlichen zylindrisches Katalysatorgehäuse tangential einmünden und das Abgas in axialer Richtung nach dem Durchströmen des Katalysatorsubstrates ausgeleitet wird. Die sehr kurze Verbindung zwischen Motorauslaß und Katalysatoreinlaß führt jedoch zu negativen Auswirkungen auf das vom Motor zu erbringende Drehmoment.

Um solche Probleme im Drehmomentverlauf zu beheben, können ausreichend lange Zuleitungen zwischen Motorauslaß und Katalysatoreinlaß zur Verfügung gestellt werden, wobei nach der DE-OS 41 16 493 der Katalysator bzw. die Katalysatoren weiter entfernt vom Motor vorgesehen werden und mit entsprechend langen Zuleitungen verbunden werden. Allerdings ist hierzu ein großer Bauraum erforderlich.

Schließlich ist aus der EP-0,809,001 eine Lösung zur motornahen Anordnung von Katalysatoren bekannt, bei der in jeder Abgasteitung, d.h. an jedem Auslaß des Motors ein eigener Katalysator vorgesehen ist. Diese Lösung ist teuer in der Herstellung und wegen des begrenzten Volumens der Katalysatoren bei der Reinigung der Abgase nicht effektiv.

Einerseits ist daher die Forderung nach einer motornahen Unterbringung des Katalysators vorhanden, sowie es andererseits bei zu kurzen Abgasleitungen an den Auslässen des Motors zu Problemen beim Drehmomentverlauf kommt.

Es ist daher die Aufgabe der vorliegenden Erfindung, eine Katalysator-Anordnung an einem Kfz zu schaffen, die bei einer motornahen Positionierung eine wirkungsvolle Abgasreinigung ermöglicht, die gleichzeitig Probleme im Drehmomentverlauf verhindert und die eine Abkopplung der Abgasanlage durch einen flexiblen Schlauch ermöglicht.

Diese Aufgabe wird durch eine Katalysator-Anordnung mit den Merkmalen gemäß dem kennzeichnenden Teil des Patentanspruchs 1 gelöst.

Demnach weist eine Katalysator-Anordnung an einem Kraftfahrzeug ein im wesentlichen zylindrisches Katalysatorgehäuse auf, welches motornah angeordnet ist, und weist eine Mehrzahl von Zuleitungen auf, die zwischen Auslässen eines Motors des Kraftfahrzeuges und zumindest zweier Einlässe des Katalysatorgehäuses angeordnet sind, wobei die Zuleitungen an den beiden Stirnflächen des im wesentlichen zylindrischen Katalysatorgehäuses einmünden, wobei die axiale Erstreckung des Katalysatorgehäuses im wesentlichen parallel zu der Hauptrichtung des Motors verläuft, und wobei die Summe der Längen der Zuleitungen möglichst groß ist. Weiterhin ist jeder der Einlässe mit dem jeweils entferntesten Motorauslaß verbunden.

Durch diese Ausbildung ist bei einer motornahen Anordnung des Katalysators eine ausreichend lange Zuleitung vorgesehen, so daß Probleme im Drehmomentverlauf vermieden werden.

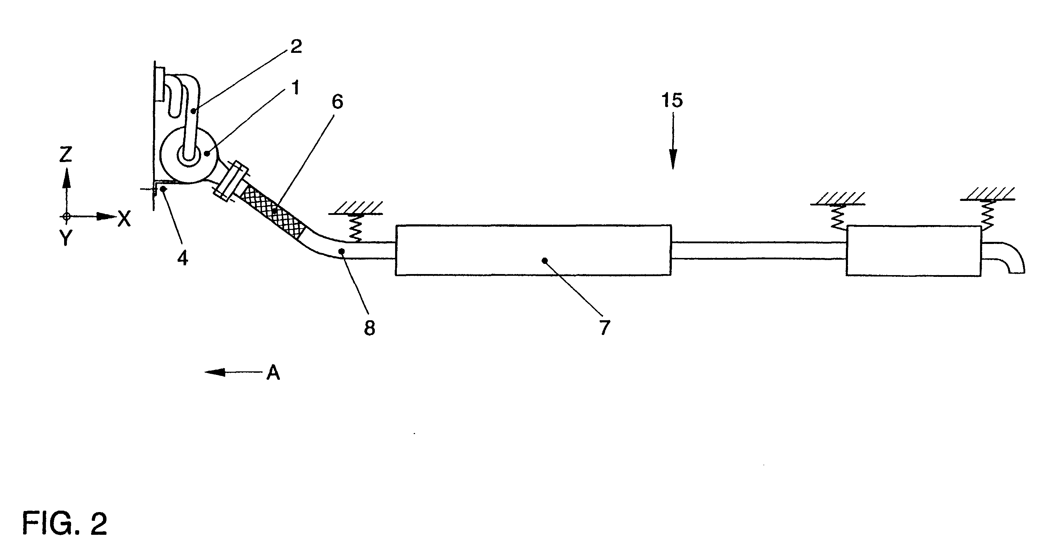

Die motornahe Anordnung des Katalysators hat darüber hinaus den Vorteil, daß die Abkopplung der sich anschließenden Abgasanlage (Bezugszeichen 15, in der Fig. 2) von den Motorschwingungen mittels des flexiblen Schlauches nach Anspruch 2 möglich ist. Dadurch wird die Beanspruchung der Abgasanlage reduziert und es können dünnere Materialien eingesetzt werden, so daß die Abgasanlage insgesamt im Gewicht reduzierbar ist. Durch den Entfall des Katalysators unter dem Fahrzeug kann an der entsprechenden Stelle ein zusätzlicher Schalldämpfer angebracht werden oder es kann alternativ der erste Schalldämpfer (Vorschalldämpfer) wesentlich größer ausgeführt werden, um sich verschärfende Außengeräuschvorschriften zu erfüllen bzw. um die Geräusche im Innenraum des Kfz zu vermindern. Schließlich ist es ein weiterer Vorteil, daß die Motorgeräusche direkt am Motor bedämpft werden und daß dadurch die Mündungsgeräusche sowie die Sekundärluftschallabstrahlung der Abgasanlage deutlich reduziert wird.

Vorteilhafte Weiterbildungen der erfindungsgemäßen Katalysator-Anordnung, anhand von Ausführungsformen in der Figurenbeschreibung erläutert, sind der Gegenstand von weiteren Unteransprüchen.

Die Erfindung wird im folgenden anhand einer ausführlichen Beschreibung der Ausführungsformen beschrieben, die sich auf die zugehörigen Zeichnungen bezieht.

In den Zeichnungen zeigt die:
Fig. 1 eine schematische Darstellung einer Katalysator-Anordnung nach einer ersten Ausführungsform gemäß der vorliegenden Erfindung;
Fig. 2 eine schematische Darstellung der Anordnung nach der Figur 1, von der Seite eines Kraftfahrzeuges gesehen;
Fig. 3 eine schematische Darstellung der Katalysator-Anordnung nach der zweiten Ausführungsform nach der vorliegenden Erfindung;
Fig. 4 eine Seitenansicht einer Halterung bzw. Befestigungseinrichtung des Katalysatorgehäuses; und
Fig. 5 eine herkömmliche Abgasanlage in perspektivischer Ansicht.

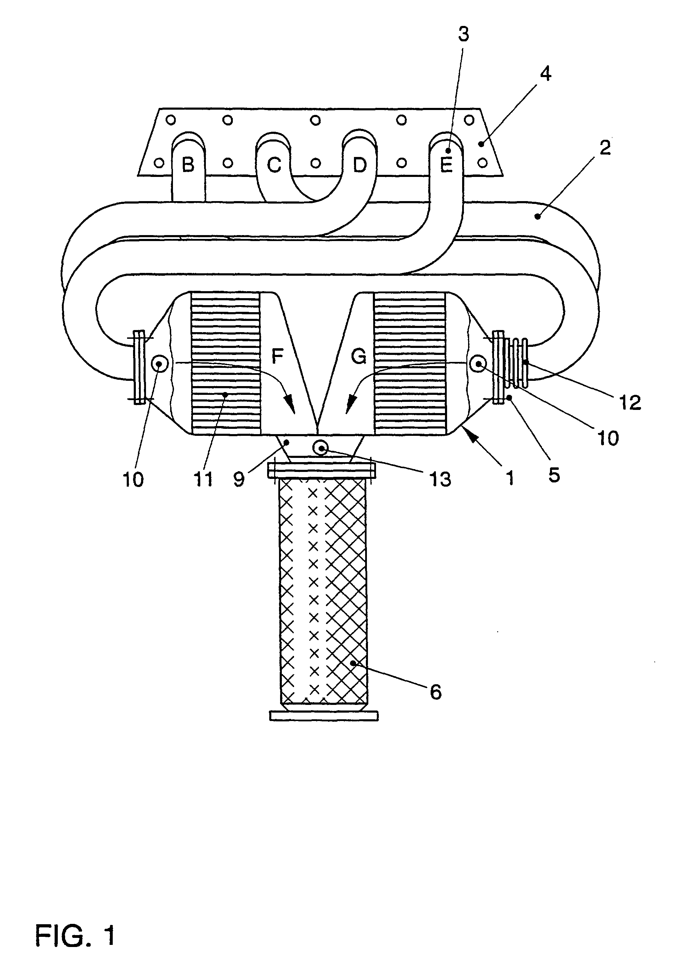

In der Figur 1 ist eine erste Ausführungsform der Katalysator-Anordnung nach der vorliegenden Erfindung dargestellt. Mit dem Bezugszeichen 1 ist ein Katalysatorgehäuse bezeichnet, welches bei dieser Ausführungsform im wesentlichen eine zylindrische Grundform aufweist. Innerhalb dieses Katalysatorgehäuses 1 befinden sich zwei Katalysator-Elemente 11, die jeweils in der linken und in der rechten Hälfte des Katalysatorgehäuses 1 untergebracht sind. An der linken und an der rechten Stirnseite des Katalysatorgehäuses 1 münden Zuleitungen 2 ein, die von Auslässen 3 eines Motors 4 abzweigen.

Der Motor 4 ist nur schematisch angedeutet und weist in der gezeigten Ausführungsform vier Zylinder auf, deren vier Ausläße B, C, D und E entsprechend durchnumeriert sind. So sind die Auslässe B und C des ersten und des zweiten Zylinders mit der rechten Stirnseite des Katalysatorgehäuses 1 verbunden, während die Auslässe D und E des dritten und des vierten Zylinders mit der linken Stirnseite des Katalysatorgehäuses 1 verbunden sind.

Auf diese Art und Weise kann eine möglichst lange Zuleitungsstrecke zwischen Auslaß 3 des Motors 4 und Einlaß des Katalysatorgehäuses 1 realisiert werden. Das Katalysatorgehäuse 1 ist hierzu parallel zu einer Hauptrichtung Y des Motors 4, d.h. der Richtung, in der die Zylinder des Motors 4 hintereinander angeordnet sind, ausgerichtet.

Anhand der Figur 2 läßt sich gut erkennen, daß bei der gezeigten Ausführungsform der Vierzylindermotor 4 quer zur Fahrtrichtung A eingebaut ist, so daß auch das Katalysatorgehäuse 1 horizontal und quer zu der Fahrtrichtung A verläuft.

Um Wärmeausdehnungen zwischen den Zuleitungen 2 und dem Katalysatorgehäuse 1 auszugleichen, ist vorzugsweise ein Ausgleichselement 12 vorgesehen, welches eine Längenausdehnung der benachbarten Bauteile aufnehmen und ausgleichen kann.

In der Figur 1 ist etwa mittig (jedoch nicht notwendigerweise, sondern zwischen den beiden Katalysatoren) an dem Katalysatorgehäuse 1 eine Ableitung 9 für die gereinigten Abgase vorgesehen, die in eine flexible schlauchförmige Abgasleitung 6 (im folgenden Flexschlauch genannt) mündet. Die Ableitung 9 ist in radialer Richtung verlaufend angeordnet.

Nachdem an den beiden Stirnseiten des Katalysatorgehäuses 1 die Zuführung der Abgase über die Zuleitungen 2 erfolgt, durchströmen die Abgase die zugeordneten Katalysator-Elemente 11. Um eine Gegenströmung (d.h. Turbulenzen, Verwirbelungen, etc.) im mittigen Bereich des Katalysatorgehäuses 1 zu verhindern, ist bei der dargestellten Ausführungsform die Mitte des Katalysatorgehäuses 1 durch einen V-förmigen Einschnitt der Gehäusewandung abgeteilt. Diese Ausbildung des Katalysatorgehäuses 1 führt zu einer Ausbildung von Strömungen F und G, wie sie in der Figur 1 angedeutet sind.

Einer oder mehrere Anschlüße 10 bzw. 13 für eine oder mehrere Lambda-Sonden können im Bereich der Stirnseiten des Katalysatorgehäuses 1 vorgesehen sein und/oder an der Ableitung 9 des Katalysatorgehäuses 1.

In der Figur 2 ist eine seitliche Ansicht der Anordnung des Motors, des Katalysators und der nachgeschalteten Abgasanlage schematisch dargestellt. Die (Haupt-) Fahrtrichtung A eines Kraftfahrzeuges, in dem die Anordnung eingebaut ist, ist nach links orientiert. Nach dem Motor 4 ist das Katalysatorgehäuse 1 quer zur Fahrtrichtung A verlaufend, angeordnet. Die Verbindung zwischen dem Motor 4 bzw. dessen Auslässen 3 und dem Katalysatorgehäuse 1 erfolgt über Zuleitungen 2, die in die Stirnflächen des Katalysatorgehäuses 1 einmünden.

Nach dem Katalysatorgehäuse 1 ist die Anordnung des Flexschlauches 6 vorgesehen, an dem wiederum eine Abgasleitung 8 einer Abgasanlage 15 angeschlossen ist. Die Abgasanlage 15 kann einen Vorschalldämpfer 7 und weitere, nicht näher beschriebene Elemente umfassen.

Der Flexschlauch 6 ist dazu in der Lage, geringfügige (wenige Zentimeter) Abweichungen zwischen der Position des Katalysatorgehäuses 1 und der Position der Abgasleitung 8 bzw. der Abgasanlage 15 auszugleichen.

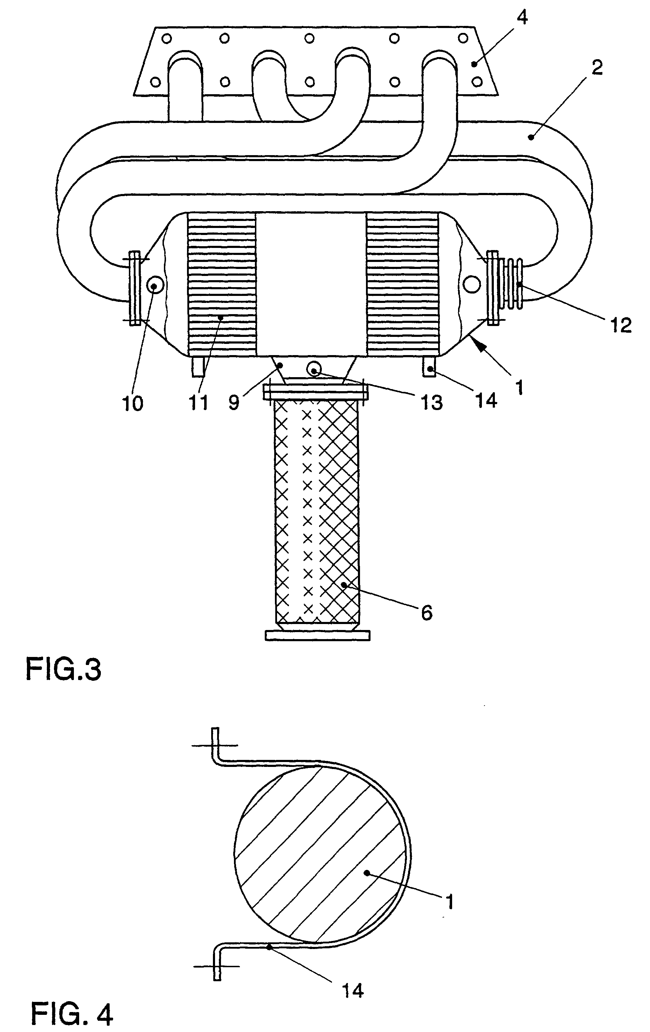

Eine weitere Ausführungsform der erfindungsgemäßen Katalysator-Anordnung ist in der Figur 3 dargestellt. Dort sind gleiche Bauteile mit den gleichen Bezugszeichen versehen.

Diese Ausführungsform unterscheidet sich von der oben beschriebenen Ausführungsform dadurch, daß das Katalysatorgehäuse 1 in der Mitte nicht abgeteilt ist, sondern durchgehend ausgebildet ist. Die Anordnung dieses Katalysatorgehäuses 1 zwischen einem Motor 4 und einer Abgasanlage 15 ist identisch zu der ersten Ausführungsform. Die Wirkungsweise ist ebenfalls identisch. Die Herstellung des durchgehenden Katalysatorgehäuses 1 ist einfacher und damit kostengünstiger auszuführen.

Schließlich ist in der Figur 4 eine Befestigungseinrichtung in Form einer Halterung 14 dargestellt, mit der das Katalysatorgehäuse 1 an dem Motor 4 befestigt wird. Die Anbindung des Katalysators an den Motor sollte keine Resonanzen bis 200 Hz aufweisen.

Die erfindungsgemäße Katalysator-Anordnung an einem Kraftfahrzeug weist also bevorzugt ein im wesentlichen zylindrisches Katalysatorgehäuse auf, welches motornah angeordnet ist, und hat darüber hinaus eine Mehrzahl von Zuleitungen, die zwischen Auslässen eines Motors des Kraftfahrzeuges und zumindest einem Einlaß des Katalysatorgehäuses angeordnet sind, wobei die Zuleitungen an den beiden Stirnflächen des im wesentlichen zylindrischen Katalysatorgehäuses einmünden, wobei die axiale Erstreckung des Katalysatorgehäuses im wesentlichen parallel zu der Hauptrichtung Y des Motors verläuft, und wobei die Summe der Längen der Zuleitungen möglichst groß ist. Durch diese Ausbildung ist bei einer motornahen Anordnung des Katalysators eine ausreichend lange Zuleitung vorgesehen, so daß Probleme im Drehmomentverlauf vermieden werden können. Die motornahe Anordnung des Katalysators hat zudem den Vorteil, daß dadurch die Abkopplung der sich anschließenden Abgasanlage mittels eines flexiblen Schlauches möglich ist.

Hinsichtlich vorstehend im einzelnen nicht näher erläuterter Merkmale der Erfindung wird in übrigen ausdrücklich auf die Ansprüche und die Zeichnungen verwiesen.

### BEZUGSZEICHENLISTE

- 1: Katalysatorgehäuse
- 2: Zuleitung(en)
- 3: Auslässe
- 4: Motor
- 5: Einlaß
- 6: Flexible Abgasleitung
- 7: Vorschalldämpfer
- 8: Abgasleitung
- 9: Ableitung
- 10: λ-Sonde
- 11: Katalysator-Element
- 12: Ausgleichselement
- 13: λ-Sonde
- 14: Halterung
- 15: Abgasanlage
- 16: Abkopplungselement
- 17: Abkopplungselement(e)

- A: Fahrtrichtung
- B: Auslaß für Zylinder 1
- C: Auslaß für Zylinder 2
- D: Auslaß für Zylinder 3
- E: Auslaß für Zylinder 4
- F: Strömungsverlauf
- G: Strömungsverlauf
- X: Richtungsangabe (Fig. 2)
- Y: Hauptrichtung (Fig. 2)
- Z: Richtungsangabe (Fig. 2)

## Patentansprüche

1. Katalysator-Anordnung an einem Kraftfahrzeug, mit:
einem im wesentlichen zylindrischen Katalysatorgehäuse (1), welches motornah angeordnet ist, und
einer Mehrzahl von Zuleitungen (2), die zwischen Auslässen (3) eines Motors (4) des Kraftfahrzeuges und zumindest zweier Einlässe (5) des Katalysatorgehäuses (1) angeordnet sind, wobei
die Zuleitungen (2) an den beiden Stirnflächen des im wesentlichen zylindrischen Katalysatorgehäuses (1) einmünden und wobei
die axiale Erstreckung des Katalysatorgehäuses (1) im wesentlichen parallel zu der Hauptrichtung (Y) des Motors (4) verläuft,
**dadurch gekennzeichnet, dass**
jeder der Einlässe mit dem jeweils entferntesten Motorauslaß verbunden ist.

2. Katalysator-Anordnung nach Anspruch 1, **dadurch gekennzeichnet, daß** stromabwärts des Katalysatorgehäuses (1) eine flexible schlauchförmige Abgasleitung (6) vorgesehen ist.

3. Katalysator-Anordnung nach Anspruch 1 oder 2, **dadurch gekennzeichnet, daß** das Katalysatorgehäuse (1) zweigeteilt ist und/oder etwa axial mittig eine radial verlaufende Ableitung (9) aufweist.

4. Katalysator-Anordnung nach einem der Ansprüche 1 bis 3, **dadurch gekennzeichnet, daß** die axiale Erstreckung des Katalysatorgehäuses (1) horizontal und quer zu der Fahrtrichtung (A) des Kraftfahrzeuges vorliegt.

5. Katalysator-Anordnung nach einem der Ansprüche 1 bis 4, **dadurch gekennzeichnet, daß** die eine Hälfte der Auslässe (B, C) bzw. Zuleitungen (2) einer Stirnfläche des Katalysatorgehäuses (1) und die andere Hälfte der Auslässe (D, E) bzw. Zuleitungen (2) der anderen Stirnfläche zugeordnet sind.

6. Katalysator-Anordnung nach Anspruch 4 oder 5, **dadurch gekennzeichnet, daß** die in Fahrtrichtung (A) links angeordneten Auslässe (B, C) des Motors (4) mit der rechten Stirnfläche des Katalysatorgehäuses (1) und die rechts angeordneten Auslässe (D, E) des Motors (4) mit der linken Stirnfläche des Katalysatorgehäuses (1) über die Zuleitungen (2) verbunden sind.

7. Katalysator-Anordnung nach einem der Ansprüche 1 bis 6, **dadurch gekennzeichnet, daß** die Stirnflächen des Katalysatorgehäuses (1) kegelstumpfförmig ausgebildet sind.

8. Katalysator-Anordnung nach einem der Ansprüche 1 bis 7, **dadurch gekennzeichnet, daß** in dem Katalysatorgehäuses (1) zumindest ein Katalysator-Element (11) vorgesehen ist, welches in axialer Richtung des Katalysatorgehäuses (1) durchströmt wird.

9. Katalysator-Anordnung nach einem der Ansprüche 1 bis 8, **dadurch gekennzeichnet, daß** an dem Katalysatorgehäuses (1) eine Befestigungseinrichtung für zumindest eine λ-Sonde (10, 13) vorgesehen ist.

10. Katalysator-Anordnung nach einem der Ansprüche 1 bis 9, **dadurch gekennzeichnet, daß** das Katalysatorgehäuse (1) mittels einer Halterung (14) an einem Motorblock befestigt ist.

## Claims

1. Catalytic converter assembly for use on an automotive vehicle, said assembly having:
a substantially cylindrical catalytic converter housing (1), which is disposed close to the engine, and
a plurality of supply pipes (2), which are disposed between outlets (3) of an engine (4) of the automotive vehicle and at least two inlets (5) of the catalytic converter housing (1),
the supply pipes (2) terminating at the two end faces of the substantially cylindrical catalytic converter housing (1), and
the axial extension of the catalytic converter housing (1) running substantially parallel to the main direction (Y) of the engine (4), **characterised in that** each of the inlets is connected to the particular engine outlet which lies the furthest remote therefrom.

2. Catalytic converter assembly according to claim 1, **characterised in that** a flexible, hose-like exhaust pipe (6) is provided downstream of the catalytic converter housing (1).

3. Catalytic converter assembly according to claim 1 or 2, **characterised in that** the catalytic converter housing (1) is divided into two and/or has a radially extending discharge pipe (9) substantially axially centrally.

4. Catalytic converter assembly according to one of claims 1 to 3, **characterised in that** the axial extension of the catalytic converter housing (1) lies horizontally and transversely relative to the direction of travel (A) of the automotive vehicle.

5. Catalytic converter assembly according to one of claims 1 to 4, **characterised in that** one half of the outlets (B, C) or respectively the supply pipes (2) is associated with one end face of the catalytic converter housing (1), and the other half of the outlets (D, E) or respectively the supply pipes (2) is associated with the other end face.

6. Catalytic converter assembly according to claim 4 or 5, **characterised in that** the outlets (B, C) of the engine (4), which are disposed on the left when viewed with respect to the direction of travel (A), are connected to the right end face of the catalytic converter housing (1), and the outlets (D, E) of the engine (4), which are disposed on the right, are connected to the left end face of the catalytic converter housing (1) via the supply pipes (2).

7. Catalytic converter assembly according to one of claims 1 to 6, **characterised in that** the end faces of the catalytic converter housing (1) have a frustoconical configuration.

8. Catalytic converter assembly according to one of claims 1 to 7, **characterised in that** at least one catalytic converter element (11) is provided in the catalytic converter housing (1) and is traversed in the axial direction of the catalytic converter housing (1).

9. Catalytic converter assembly according to one of claims 1 to 8, **characterised in that** a securing means for at least one λ probe (10, 13) is provided on the catalytic converter housing (1).

10. Catalytic converter assembly according to one of claims 1 to 9, **characterised in that** the catalytic converter housing (1) is mounted on an engine block by means of a mounting support (14).

## Revendications

1. Agencement d'un catalyseur sur un véhicule automobile, comprenant :
- un corps de catalyseur (1) essentiellement cylindrique, disposé à proximité du moteur, et
- une multiplicité de conduites d'arrivée (2), disposées entre des échappements (3) d'un moteur (4) du véhicule automobile et au moins deux admissions (5) du corps de catalyseur (1),
- les conduites d'arrivée (2) débouchant sur les deux surfaces frontales du corps de catalyseur (1) essentiellement cylindrique et
- l'extension axiale du corps de catalyseur (1) étant essentiellement parallèle au sens principal (Y) du moteur (4),
**caractérisé en ce que** chacune des admissions est reliée à l'échappement du moteur respectivement le plus distant.

2. Agencement d'un catalyseur suivant la revendication 1, **caractérisé en ce qu'**un collecteur d'échappement (6) en forme de tuyau flexible est prévu en aval du corps de catalyseur (1).

3. Agencement d'un catalyseur suivant l'une des revendications 1 et 2, **caractérisé en ce que** le corps de catalyseur (1) est partagé en deux et/ou présente à peu près en son centre axial une dérivation (9) s'étendant dans le sens radial.

4. Agencement d'un catalyseur suivant l'une des revendications 1 à 3, **caractérisé en ce que** l'extension axiale du corps de catalyseur (1) est horizontale et transversale au sens de marche (A) du véhicule automobile.

5. Agencement d'un catalyseur suivant l'une des revendications 1 à 4, **caractérisé en ce qu'**une moitié des échappements (B, C) ou des conduites d'arrivée (2) est associée à une surface frontale du corps de catalyseur (1) et l'autre moitié des échappements (D, E) ou des conduites d'arrivée (2) est associée à l'autre surface frontale.

6. Agencement d'un catalyseur suivant l'une des revendications 4 et 5, **caractérisé en ce que** les échappements (B, C) du moteur (4), disposés à gauche dans le sens de marche (A), sont reliés par l'intermédiaire des conduites d'arrivée (2) à la surface frontale droite du corps de catalyseur (1), et les échappements (D, E) du moteur (4), disposés à droite, sont reliés par l'intermédiaire des conduites d'arrivée (2) à la surface frontale gauche du corps de catalyseur (1).

7. Agencement d'un catalyseur suivant l'une des revendications 1 à 6, **caractérisé en ce que** les surfaces frontales du corps de catalyseur (1) sont réalisées en forme de tronc de cône.

8. Agencement d'un catalyseur suivant l'une des revendications 1 à 7, **caractérisé en ce qu'**au moins un élément catalytique (11), balayé dans le sens axial du corps de catalyseur (1), est prévu dans le corps (1).

9. Agencement d'un catalyseur suivant l'une des revendications 1 à 8, **caractérisé en ce qu'**un dispositif de fixation pour au moins une sonde λ (10, 13) est prévu sur le corps de catalyseur (1).

10. Agencement d'un catalyseur suivant l'une des revendications 1 à 9, **caractérisé en ce que** le corps de catalyseur (1) est fixé sur un bloc des cylindres au moyen d'une bride de support (14).
